# EUROPEAN PATENT APPLICATION

(11) **EP 2 196 257 A2**
(43) Date of publication of application: **16.06.2010**
(21) Application number: 09178110.4
(22) Date of filing: 04.12.2009
(51) Int. Cl.: B01J 13/18, C11D 3/50

(54) **Microcapsules containing active ingredients**

(30) Priority: 04.12.2008 US 328340
(71) Applicant: INTERNATIONAL FLAVORS & FRAGRANCES INC., New York New York 10019 (US)
(72) Inventor: Popplewell, Lewis Michael, Morganville, NJ (US); Lei, Yabin, Holmdel, NJ 07733 (US); Guerry, Renee Lynn, Keyport, NJ 07735 (US); Huang, Xiao, Freehold, NJ 07728 (US); Kroenig, Andrea Noel, Hoboken, NJ 07030 (US); Mcelwee, Jefrey James, Toms River, NJ 08753 (US)
(74) Representative: Lawrence, John

(57) **Abstract**

The present invention relates to a microcapsule particle composition that is composed of a sol-gel material. The microcapsule particle composition is well suited for personal care and cleaning products.

## Description

### Field of the Invention

The present invention relates to active materials that are encapsulated with a solgel material. The microcapsule particle composition is well suited for applications associated with personal care and cleaning products.

### Background of the Invention

Fragrance chemicals are used in numerous products to enhance the consumer's enjoyment of a product. Fragrance chemicals are added to consumer products such as laundry detergents, fabric softeners, soaps, detergents, personal care products, such as but not limited to shampoos, body washes, deodorants and the like, as well as numerous other products.

In order to enhance the effectiveness of the fragrance materials for the user, various technologies have been employed to enhance the delivery of the fragrance materials at the desired time. One widely used technology is encapsulation of the fragrance material in a protective coating. Frequently the protective coating is a polymeric material. The polymeric material is used to protect the fragrance material from evaporation, reaction, oxidation or otherwise dissipating prior to use. A brief overview of polymeric encapsulated fragrance materials is disclosed in the following U.S. Patents: U.S. Patent No. 4,081,384 discloses a softener or anti-stat core coated by a polycondensate suitable for use in a fabric conditioner; U.S. Patent No. 5,112,688 discloses selected fragrance materials having the proper volatility to be coated by coacervation with micro particles in a wall that can be activated for use in fabric conditioning; U.S. Patent No. 5,145,842 discloses a solid core of a fatty alcohol, ester, or other solid plus a fragrance coated by an aminoplast shell; and U.S. Patent No. 6,248,703 discloses various agents including fragrance in an aminoplast shell that is included in an extruded bar soap.

While encapsulation of fragrance in a polymeric shell can help prevent fragrance degradation and loss, it is often not sufficient to significantly improve fragrance performance in consumer products. Therefore, methods of aiding the deposition of encapsulated fragrances have been disclosed. U.S. Patent No. 4,234,627 discloses a liquid fragrance coated with an aminoplast shell further coated by a water insoluble meltable cationic coating in order to improve the deposition of capsules from fabric conditioners. U.S. Patent No. 6,194,375 discloses the use of hydrolyzed polyvinyl alcohol to aid deposition of fragrance-polymer particles from wash products. U.S. Patent No. 6,329,057 discloses use of materials having free hydroxy groups or pendant cationic groups to aid in the deposition of fragranced solid particles from consumer products.

In addition, the prior art discloses the use of silica to form microcapsule formulations specifically designed to prevent an encapsulated active ingredient from leaving the microcapsule. This is desirable when the active ingredient is an irritant to the body tissue to which it is applied. It is also is desired when the active ingredient acts by interaction with light, such as sunlight. However, U.S. Pat. No. 6,303,149 fails to disclose compositions and methods for releasing and hence delivering the active ingredients. Despite these and many other disclosures there is an ongoing need for the improved delivery of fragrance materials for various personal care products, rinse-off products and leave-on products that provide improved performance.

### Summary of the Invention

According to the present invention a process is provided for preparing microcapsule particle composition having a core material encapsulated within a microcapsular shell. The core material may contain at least one active ingredient, such as but not limited to a fragrance. The process comprises the steps of first mixing an appropriate amount sol-gel precursor and fragrance oil, followed by cooling of the mixture obtained. The next step in the process is to prepare a surfactant solution by dissolving an appropriate amount of surfactant in water and then cooling the surfactant solution. In the next step the sol-gel precursor and fragrance oil are added to the surfactant solution and then the mixture is homogenized. A defoamer is added as needed and the mixture is allowed to cure to form the microcapsule particle composition.

In another embodiment, a process is provided for preparing microcapsule particle composition having a core material encapsulated within a microcapsular shell. The core material may contain at least one active ingredient such as but not limited to a fragrance. In the first step of the process a fragrance oil is added to an aqueous surfactant solution. The mixture is homogenized to form a fragrance emulsion and then sol-gel precursor is added dropwise to the fragrance emulsion under continuous mixing. The final mixture is allowed to cure at room temperature to form the microcapsule particle composition.

In yet another embodiment, a process for preparing microcapsule particle composition having a core material encapsulated within a microcapsular shell is provided. The microcapsules prepared according to this process may contain a core material, which may contain at least one active ingredient such as, but not limited to a fragrance. The first step of the process is to add an appropriate amount of fragrance oil to an aqueous surfactant solution and then homogenize the mixture to form a fragrance emulsion. An appropriate amount of water is added to the fragrance emulsion to achieve the desired concentration. Then an appropriate amount of sol-gel precursor is added to the to the diluted fragrance emulsion dropwise under constant mixing. The mixture is then allowed to cure at room temperature until the microcapsule particle composition is formed.

In still another embodiment a process is provided for preparing a microcapsule particle composition having a core material encapsulated within a microcapsular shell. The core material comprises at least one active ingredient such as but not limited to a fragrance. The first step of the process is to prepare a fragrance emulsion by emulsifying an appropriate amount of fragrance oil into surfactant solution. The second step is to prepare a sol-gel precursor emulsion by emulsifying an appropriate amount of sol-gel precursor and an aqueous surfactant solution. The next step is to add the sol-gel precursor emulsion to the fragrance emulsion under constant mixing and then allow the final mixture to cure at room temperature until capsule have formed

In an additional embodiment of the invention there a process is provided for preparing microcapsule particle composition having a core material encapsulated within a microcapsular shell, wherein the core material may contain at least one active ingredient such as but not limited to fragrance oil. The process comprises the steps of adding fragrance oil to an aqueous surfactant and homogenizing the mixture to provide a fragrance emulsion. An appropriate amount of water is added to the fragrance emulsion to achieve the desired concentration. The next step in the process is to prepare a sol-gel precursor emulsion by emulsifying sol-gel precursor into an aqueous surfactant solution. The sol-gel precursor emulsion is then added to the fragrance emulsion under constant mixing and then allowed to cure at room temperature until capsules have formed.

In another embodiment of the invention, a microcapsule particle composition having a core material encapsulated within a microcapsular shell is provided. According to this embodiment the wall material of the microcapsule is composed of a sol-gel precursor.

In yet a further embodiment a personal care composition containing the microcapsule composition is provided.

In still a further embodiment a personal care product is provided containing the microcapsule composition of the present invention.

### Detailed Description of the Invention

According to the present invention a process is provided for preparing microcapsule particle composition, having a core material encapsulated within a microcapsular shell. The core material comprises at least one active ingredient, such as but not limited to a fragrance. The process comprises the steps of first mixing an appropriate amount sol-gel precursor and fragrance oil, followed by cooling of the mixture obtained. The next step in the process is to prepare a surfactant solution by dissolving an appropriate amount of surfactant in water and then cooling the surfactant solution. In the next step the sol-gel precursor and fragrance oil are added to the surfactant solution and then the mixture is homogenized. A defoamer is added as needed and the mixture is allowed to cure to form the capsule particles.

In another embodiment, a process is provided for preparing microcapsule particle composition having a core material encapsulated within a microcapsular shell, wherein the core material may contain at least one active ingredient such as but not limited to a fragrance. In the first step of the process a fragrance oil is added to an aqueous surfactant solution. The mixture is homogenized to form a fragrance emulsion and then sol-gel precursor is added dropwise to the fragrance emulsion under continuous mixing. The final mixture is allowed to cure at room temperature to form capsule particles.

In yet another embodiment, a process for preparing microcapsule particle composition having a core material encapsulated within a microcapsular shell is provided. The microcapsules prepared according to this process may contain at least one active ingredient such as but not limited to a fragrance. The first step of the process is to add an appropriate amount of fragrance oil to an aqueous surfactant solution and then homogenize the mixture to form a fragrance emulsion. An appropriate amount of water is added to the fragrance emulsion to achieve the desired concentration. Then an appropriate amount of sol-gel precursor is added to the to the diluted fragrance emulsion dropwise under constant mixing. The mixture is then allowed to cure at room temperature until capsules are formed.

In still another embodiment a process is provided for preparing microcapsules having a core material encapsulated within a microcapsular shell, wherein the core material comprises at least one active ingredient such as but not limited to a fragrance. The first step of the process is to prepare a fragrance emulsion by emulsifying an appropriate amount of fragrance oil into surfactant solution. The second step is to prepare a sol-gel precursor emulsion by emulsifying an appropriate amount of sol-gel precursor and an aqueous surfactant solution. The next step is to add the sol-gel precursor emulsion to the fragrance emulsion under constant mixing and then allow the final mixture to cure at room temperature until capsule have formed

In an additional embodiment of the invention a process is provided for preparing microcapsule particle composition having a core material encapsulated within a microcapsular shell, wherein the core material comprises at least one active ingredient such as, but not limited to fragrance oil. The process comprises the steps of adding fragrance oil to an aqueous surfactant and homogenizing the mixture to provide a fragrance emulsion. An appropriate amount of water is added to the fragrance emulsion to achieve the desired concentration. The next step in the process is to prepare a sol-gel precursor emulsion by emulsifying sol-gel precursor into an aqueous surfactant solution. The sol-gel precursor emulsion is then added to the fragrance emulsion under constant mixing and then allowed to cure at room temperature until capsules have formed.

According to one embodiment of the present invention, the core material may contain an active ingredient, such as, but not limited to a fragrance. The fragrances suitable for use in this invention include without limitation, any combination of fragrance, essential oil, plant extract or mixture thereof that is compatible with, and capable of being encapsulated by a monomer or a polymer.

Many types of fragrances can be employed in the present invention, the only limitation being the compatibility and ability to be encapsulated by the polymer being employed, and compatibility with the encapsulation process used. Suitable fragrances include but are not limited to fruits such as almond, apple, cherry, grape, pear, pineapple, orange, strawberry, raspberry; musk, flower scents such as lavender-like, rose-like, iris-like, and carnation-like. Other pleasant scents include herbal scents such as rosemary, thyme, and sage; and woodland scents derived from pine, spruce and other forest smells. Fragrances may also be derived from various oils, such as essential oils, or from plant materials such as peppermint, spearmint and the like. Other familiar and popular smells can also be employed such as baby powder, popcorn, pizza, cotton candy and the like in the present invention.

A list of suitable fragrances is provided in U.S. Patents 4,534,891, 5,112,688 and 5,145,842. Another source of suitable fragrances is found in Perfumes Cosmetics and Soaps, Second Edition, edited by W. A. Poucher, 1959. Among the fragrances provided in this treatise are acacia, cassie, chypre, cylamen, fern, gardenia, hawthorn, heliotrope, honeysuckle, hyacinth, jasmine, lilac, lily, magnolia, mimosa, narcissus, freshly-cut hay, orange blossom, orchids, reseda, sweet pea, trefle, tuberose, vanilla, violet, wallflower, and the like.

As used herein olfactory effective amount is understood to mean the amount of compound in perfume compositions the individual component will contribute to its particular olfactory characteristics, but the olfactory effect of the fragrance composition will be the sum of the effects of each of the fragrance ingredients. Thus the compounds of the invention can be used to alter the aroma characteristics of the perfume composition by modifying the olfactory reaction contributed by another ingredient in the composition. The amount will vary depending on many factors including other ingredients, their relative amounts and the effect that is desired.

The level of fragrance in the microcapsule varies from about 5 to about 95 weight percent, preferably from about 30 to about 95 and most preferably from about 50 to about 90 weight percent on a dry basis. In addition to the fragrance other agents can be used in conjunction with the fragrance and are understood to be included.

As noted above, the fragrance may also be combined with a variety of solvents which serve to increase the compatibility of the various materials, increase the overall hydrophobicity of the blend, influence the vapor pressure of the materials, or serve to structure the blend. Solvents performing these functions are well known in the art and include mineral oils, triglyceride oils, silicone oils, fats, waxes, fatty alcohols, diisodecyl adipate, and diethyl phthalate among others.

A common feature of many encapsulation processes is that they require the fragrance material to be encapsulated to be dispersed in aqueous solutions of polymers, pre-condensates, surfactants, and the like prior to formation of the capsule walls. Therefore, materials having low solubility in water, such as highly hydrophobic materials are preferred, as they will tend to remain in the dispersed perfume phase and partition only slightly into the aqueous solution. Fragrance materials with Clog P values greater than 1, preferably greater than 3, and most preferably greater than 5 will thus result in micro-capsules that contain cores most similar to the original composition, and will have less possibility of reacting with materials that form the capsule shell. Surfactants contemplated for use in the present invention may be anionic, nonionic or cationic surfactants.

One object of the present invention is to deposit capsules containing fragrance cores on desired substrates such as cloth, hair, and skin during washing and rinsing processes. Further, it is desired that, once deposited, the capsules release the encapsulated fragrance either by diffusion through the capsule wall, via small cracks or imperfections in the capsule wall caused by drying, physical, or mechanical means, or by large-scale rupture of the capsule wall. In each of these cases, the volatility of the encapsulated perfume materials is critical to both the speed and duration of release, which in turn control consumer perception. Thus, fragrance chemicals which have higher volatility as evidenced by normal boiling points of less than 250°C, preferably less than about 225°C are preferred in cases where quick release and impact of fragrance is desired. Conversely, fragrance chemicals that have lower volatility (boiling points greater than 225°C) are preferred when a longer duration of aroma is desired. Of course, fragrance chemicals having varying volatility may be combined in any proportions to achieve the desired speed and duration of perception.

In order to provide the highest fragrance impact from the fragrance encapsulated capsules deposited on the various substrates referenced above, it is preferred that materials with a high odor-activity be used. Materials with high odor-activity can be detected by sensory receptors at low concentrations in air, thus providing high fragrance perception from low levels of deposited capsules. This property must be balanced with the volatility as described above. Some of the principles mentioned above are disclosed in U.S. Patent No. 5,112,688.

The following fragrance ingredients provided in Table I are among those suitable for inclusion within the capsule of the present invention:

**TABLE1**

| **PERFUME INGREDIENTS** | **CLOGP** |
|---|---|
| Allyl cyclohexane propionate | 3.935 |
| Ambrettolide | 6.261 |
| Amyl benzoate | 3.417 |
| Amyl cinnamate | 3.771 |
| Amyl cinnamic aldehyde | 4.324 |
| Amyl cinnamic aldehyde dimethyl acetal | 4.033 |
| Iso-amyl salicylate | 4.601 |
| Aurantiol (Trade name for Hydroxycitronellal-methylanthranilate) | 4.216 |
| Benzyl salicylate | 4.383 |
| para-tert-Butyl cyclohexyl acetate | 4.019 |
| Iso butyl quinoline | 4.193 |

| **PERFUME INGREDIENTS** | **CLOGP** |
|---|---|
| beta-Caryophyllene | 6.333 |
| Cadinene | 7.346 |
| Cedrol | 4.530 |
| Cedryl acetate | 5.436 |
| Cedryl formate | 5.070 |
| Cinnamyl cinnamate | 5.480 |
| Cyclohexyl salicylate | 5.265 |
| Cyclamen aldehyde | 3.680 |
| Diphenyl methane | 4.059 |
| Diphenyl oxide | 4.240 |
| Dodecalactone | 4.359 |
| Iso E Super (Trade name for 1-(1,2,3,4,5,6,7,8-Octahydro-2,3,8,8-tetramethyl-2-naphthalenyl)-ethanone) | 3.455 |
| Ethylene brassylate | 4.554 |
| Ethyl undecylenate | 4.888 |
| Exaltolide (Trade name for 15-Hydroxyentadecanloic acid, lactone) | 5.346 |
| Galaxolide (Trade name for 1,3,4,6,7,8-Hexahydro-4,6,6,7,8,8-hexamethylcyclopenta-gamma-2-benzopyran) | 5.482 |
| Geranyl anthranilate | 4.216 |
| Geranyl phenyl acetate | 5.233 |
| Hexadecanolide | 6.805 |
| Hexenyl salicylate | 4.716 |
| Hexyl cinnamic aldehyde | 5.473 |
| Hexyl salicylate | 5.260 |
| Alpha-Irone | 3.820 |
| Lilial (Trade name for para-tertiary-Butyl-alpha-methyl hydrocinnamic aldehyde) | 3.858 |
| Linalyl benzoate | 5.233 |
| Methyl dihydrojasmone | 4.843 |
| Gamma-n-Methyl ionone | 4.309 |
| Musk indanone | 5.458 |

| **PERFUME INGREDIENTS** | **CLOGP** |
|---|---|
| Musk tibetine | 3.831 |
| Oxahexadecanolide-10 | 4.336 |
| Oxahexadecanolide-11 | 4.336 |
| Patchouli alcohol | 4.530 |
| Phantolide (Trade name for 5-Acetyl-1,1,2,3,3,6-hexamethyl indan) | 5.977 |
| Phenyl ethyl benzoate | 4.058 |
| Phenylethylphenylacetate | 3.767 |
| Phenyl heptanol | 3.478 |
| Alpha-Santalol | 3.800 |
| Thibetolide (Trade name for 15-Hydroxypentadecanoic acid, lactone) | 6.246 |
| Delta-Undecalactone | 3.830 |
| Gamma-Undecalactone | 4.140 |
| Vetiveryl acetate | 4.882 |
| Ylangene | 6.268 |
| Methyl Beta Napthyl Ketone | 1.99 |
| Terpeneol Couer | 2.67 |
| Geraniol | 2.7 |
| Dihydromyrcenol | 2.99 |
| Citronellol 950 | 3.3 |
| Tetrahydromyrcenol | 3.54 |

The higher ClogP materials are preferred, meaning that those materials with a ClogP value of 4.5 are preferred over those fragrance materials with a ClogP of 4; and those materials are preferred over the fragrance materials with a ClogP of 3.3.

The fragrance formulation of the present invention should have at least about 40 weight percent of materials with ClogP greater than 3.3, preferably greater than about 80 and more preferably greater than about 90 weight percent of materials with ClogP greater than 4.

In an additional embodiment the fragrance formulation may contain fragrance materials with a ClogP greater than about 1.5.

Those with skill in the art appreciate that fragrance formulations are frequently complex mixtures of many fragrance ingredients. A perfumer commonly has several thousand fragrance chemicals to work from. Those with skill in the art appreciate that the present invention may contain a single ingredient, but it is much more likely that the present invention will comprise at least eight or more fragrance chemicals, more likely to contain twelve or more and often twenty or more fragrance chemicals. The present invention also contemplates the use of complex fragrance formulations containing fifty or more fragrance chemicals, seventy five or more or even a hundred or more fragrance chemicals in a fragrance formulation.

Preferred fragrance materials will have both high ClogP and high vapor pressure. Among those having these properties are:
Para cymene, Caphene, Mandarinal Firm, Vivaldie, Terpinene, Verdox, Fenchyl acetate, Cyclohexyl isovalerate, Manzanate, Myrcene, Herbavert, Isobutyl isobutyrate, Tetrahydrocitral, Ocimene and Caryophyllene.

According to on embodiment of the invention, the microcapsule particle composition is well suited for personal care and cleaning products. The present invention is also suitable for wash-off products, which are understood to be those products that are applied for a given period of time and then are removed. Products suitable for this invention are common in areas such as laundry products, and include detergents, fabric conditioners, and the like; as well as personal care products which include shampoos, hair rinses, body washes, soaps, anti-perspirants, deodorants and the like.

In one embodiment, an anti-perspirant roll-on personal care product is provided which contains an effective amount of the microcapsule particle composition of the present invention.

As described herein, the present invention is well suited for use in a variety of well-known consumer products such as laundry detergent and fabric softeners, liquid dish detergents, automatic dish detergents, as well as hair shampoos and conditioners. These products employ surfactant and emulsifying systems that are well known. For example, fabric softener systems are described in U.S. Patents 6,335,315, 5,674,832, 5,759,990, 5,877,145, 5,574,179; 5,562,849, 5,545,350, 5,545,340, 5,411,671, 5,403,499, 5,288,417, 4,767,547, 4,424,134. Liquid dish detergents are described in 6,069,122 and 5,990,065; automatic dish detergent products are described in 6,020,294, 6,017,871, 5,968,881, 5,962,386, 5,939,373, 5,914,307, 5,902,781, 5,705,464, 5,703,034, 5,703,030, 5,679,630, 5,597,936, 5,581,005, 5,559,261, 4,515,705, 5,169,552, and 4,714,562. Liquid laundry detergents which can use the present invention include those systems described in 5,929,022, 5,916,862, 5,731,278, 5,565,145, 5,470,507, 5,466,802, 5,460,752, 5,458,810, 5,458,809, 5,288,431,5,194,639, 4,968,451, 4,597,898, 4,561,998, 4,550,862, 4,537,707, 4,537,706, 4,515,705, 4,446,042, and 4,318,818. Shampoo and conditioners that can employ the present invention include 6,162,423, 5,968,286, 5,935561, 5,932,203, 5,837,661, 5,776,443, 5,756,436, 5,661,118, 5,618,523, 5,275,755, 5,085,857, 4,673,568, 4,387,090 and 4,705,681.

Sol-gel precursors, i.e. starting compounds capable of forming gels, suitable for the purposes of the invention are known per se to the expert. Sol-gel precursors usable in accordance with the invention are, for example, compounds, which are capable of forming gels, such as silicon, boron, aluminum, titanium, zinc, zirconium and vanadium. According to one embodiment, preferred sol-gel precursors are silicon, boron and aluminum compounds, more particularly organosilicon, organoboron and organoaluminum compounds. The precursors can also include metal alkoxides and b-diketonates

Sol-gel precursors suitable for the purposes of the invention are selected in particular from the group of di-, tri- and/or tetrafunctional silicic acid, boric acid and alumoesters, more particularly alkoxysilanes (alkyl orthosilicates), and precursors thereof.

One example of sol-gel precursors suitable for the purposes of the invention are alkoxysilanes corresponding to the following general formula:

(R₁O)(R₂O)M(X)(X')

wherein X is equal to hydrogen, or -OR₃, and X' is equal to hydrogen, or -OR₄ and R1, R₁, R₂, R₃ and R₄ independently represent an organic group, more particularly a linear or branched alkyl group, preferably a C₁₋₁₂ alkyl. M can be equal to Si, Ti, and Zr.

One example of a preferred sol/gel precursors suitable for the purposes of the invention are alkoxysilanes corresponding to the following general formula:

(R₁O)(R₂O)Si(X)(X')

wherein X is equal to hydrogen, or -OR₃, and X' is equal to hydrogen, or -OR₄ and R1, R₁, R₂, R₃ and R₄ independently represent an organic group, more particularly a linear or branched alkyl group, preferably a C₁₋₁₂ alkyl.

According to one embodiment, particularly preferred compounds are the silicic acid esters tetramethyl orthosilicate (TMOS) and tetraethyl orthosilicate (TEOS). A preferred compound includes Dynasylan® (commercially available from Degussa Corporation , Parsippany New Jersey, USA). Other sol-gel precursors suitable for the purposes of the invention are described, for example, in German Patent Application DE10021165. These sol-gel precursors are various hydrolyzable organosilanes such as, for example, alkylsilanes, alkoxysilanes, alkyl alkoxysilanes and organoalkoxysilanes. Besides the alkyl and alkoxy groups, other organic groups (for example allyl groups, aminoalkyl groups, hydroxyalkyl groups, etc.) may be attached as substituents to the silicon.

Recognizing that metal and semi metal alkoxide monomers (and their partially hydrolyzed and condensed polymers) such as tetramethoxy silane (TMOS), tetraethoxy silane (TEOS), etc. are very good solvents for numerous molecules and active ingredients is highly advantageous since it facilitated the utilization of this solubility property to load the dissolved molecules or substances in the monomeric precursor solvent or in the hydrolysis-condensation polymer of the monomer solvent. Nonetheless, the present invention may also be used to coat or load molecules or active ingredients which can be suspended in the precursors.

The particle size of the microcapsules may be in the range of 0.01-1000 microns in diameter, preferably 0.1-100 microns in diameter and more preferably 1-10 microns in diameter.

The wall thickness of the capsules can be controlled by varying the amount of monomer added. The ratio of monomer, such as TEOS, to that of oil phase, such as fragrance, may vary from about 2 to about 80 weight percent, preferably from about 5 to about 60 weight percent, more preferably from about 10 to about 50 weight percent, most preferably from about 15 to about 40 weight percent.

The water in the microcapsule particle composition may also be removed to provide a final product in powder form.

According to one embodiment of the present invention, the spray dry carriers can be selected from the group consisting of carbohydrates such as chemically modified starches and/or hydrolyzed starches, gums such as gum arabic, proteins such as whey protein, cellulose derivatives, clays, synthetic water-soluble polymers and/or copolymers such as polyvinyl pyrrolidone, polyvinyl alcohol. The spray dry carriers may be present in an amount from about 1% to about 50%, more preferably from about 5% to about 20%.

Optionally, a free flow agent (anticaking agent) of silicas which may be hydrophobic (i.e. silanol surface treated with halogen silanes, alkoxysilanes, silazanes, siloxanes, etc. such as Sipernat D17, Aerosil R972 and R974 (available from Degussa), etc.) and/or hydrophilic such as Aerosil 200, Sipernat 225, Sipernat 50S, (available from Degussa), Syloid 244 (available from Grace Davison), may be present from about 0.01 % to about 10%, more preferable from 0.5% to about 5%.

Further suitable humectants and viscosity control/ suspending agents are disclosed in U.S. Patent Nos. 4,428,869, 4,464,271, 4,446,032, and 6,930,078 may also be incorporated. Details of hydrophobic silicas as a functional delivery vehicle of active materials other than a free flow/anticaking agent are disclosed in U.S. Patent Nos. 5,500,223 and 6,608,017.

As described herein, the spray-dried microcapsule particle composition is well suited for use in a variety of all dry (anhydrous) products: powder laundry detergent, fabric softener dryer sheets, household cleaning dry wipes, powder dish detergent, floor cleaning cloths, or any dry form of personal care products (e.g. shampoo powder, deodorant powder, foot powder, soap powder, baby powder), etc. Because of high fragrance and/or active agent concentration in the spray-dried products of the present invention, characteristics of the aforementioned consumer dry products will not be adversely affected by a small dosage of the spray-dried products.

The spray drying inlet temperature is in the range of about 150 °C and about 240 °C, preferably between about 170 °C and about 230 °C, more preferably between about 190 °C and 220 °C.

The present invention imparts a consumer benefit specifically relating to the different phase fragrance and/or benefit agent release: long-lasting benefit and/or fragrance perception via control release from capsules and relative immediate benefit and/or fragrance perception via release from water-soluble matrix dissolution. Also the change of sensory perception can be achieved due to the fragrance encapsulated in capsules could be different from that encapsulated in spray dry matrix. Finally, the high fragrance and/or benefit agent shelf life stability is made possible when spray-dried particles are placed in anhydrous bases with a minimal leaching.

All U.S. Patents and patent applications cited herein are incorporated by reference as if set forth herein in their entirety.

The following examples are provided as specific embodiments of the present invention. These and additional modifications and improvements of the present invention may also be apparent to those with ordinary skill in the art. The particular combinations of elements described and illustrated herein are intended only to represent only a certain embodiment of the present invention and are not intended to serve as limitations of alternative articles within the spirit and scope of the invention.

### Example 1

### Method A: Preparation of Silica Capsule by Direct Emulsification

Twelve grams tetraethyl orthsilicate (TEOS) was mixed with 140 g of fragrance oil ( to form an oil phase and the mixture was cooled down in an ice-bath. The fragrance is suitable for personal care applications. In a separate vessel, 150 g of 0.5% aqueous surfactant (CTAC: cetyl trimethyl ammonium chloride obtained as 25% solution from Aldrich Chemical Company, Milwaukee, Wisconsin, USA) solution was prepared by dissolving the needed amount of surfactant in distilled water and was also cooled down on an ice-bath. The oil phase was then poured into the aqueous phase and the mixture was homogenized using a high shear mixer (Ultra Turrax T 25 Basic, IKA, Werke). Four drops of defoamer was added to suppress the foam generated. The pH of the system is maintained around 3.9. The system was the left at room temperature and cured for an extended period of time. The capsule formed was well dispersed and generally has a particle size ranging from submicron to one hundred micron depending on the emulsifier and shear rate used.
Capsule can also be prepared without cooling the various mixtures. The amount of wall material can be easily adjusted by adjusting the amount of TEOS.

### Example 2

### Preparation of Silica Capsule by direct emulsification with higher wall polymer loading.

This was done using the same fragrance as in Example 1 and the same process in Example 1. However, the amount of TEOS was increased to 36 g and the amount of fragrance remained the same.

### Example 3

### Method B: Preparation of Silica Capsule by direct emulsification of oil, then adding the TEOS: The 1-step post-addition process.

### Step one. Preparation of fragrance emulsion.

140 g fragrance oil was placed in round bottom vessel and was cooled down in an ice-bath. In a separate vessel, 0.5% of aqueous surfactant solution (150 g) was prepared by dissolving the needed amount of solid surfactant in distilled water and was also cooled down on an ice-bath. The oil phase was then poured into the aqueous phase and the mixture was homogenized with a high shear mixer (Ultra Turrax T 25 Basic, IKA, Werke). Four drops of defoamer was added to suppress the foaming generated.

### Step two. Addition of TEOS to the fragrance emulsion.

Twenty four gram of wall forming TEOSwas weighted out in a clean and dry vessel and was transferred into a dropping funnel. It was then added drop wise into the fragrance emulsion prepared in Step one under constant mixing. The mixing speed was reduced once the addition of TEOS was complete. The system was then left at room and cured for an extended period of time. The pH of the system is maintained around 3.9. The capsule formed was well dispersed and generally has a particle size ranging from submicron to one hundred micron depending on the emulsifier and shear rates used.

### Example 4

### Method C: Preparation of silica capsule by preparing concentrated fragrance emulsification, diluting the fragrance emulsion to desired concentration, and adding the TEOS: The 2-step post-addition process

### Step one. Preparation of concentrated fragrance emulsion.

This was achieved the same as step one on Example 4 using 140 g of the same fragrance.

### Step two: Preparation of diluted fragrance emulsion.

This was achieved the by blending the emulsion prepared in step one of example 3 with the desired amount of water to generate the desired concentration.

### Step three. The formation of silica capsules by adding TEOS to the diluted fragrance emulsion.

The amount of TEOS added in this step is normally determined by the wall polymer level needed and the amount of wall forming TEOS can be varied from 1% to 30% of the finished formulation.
Typically, the desired amount TEOS (24 g in this example) was weighted out and placed in a clean and dry dropping funnel. The TEOS was then added drop wise into the fragrance emulsion prepared in step two under constant mixing. The mixing speed was reduced once the addition of TEOS was complete. The system was the left at room and cured for an extended period of time. The pH of the system is maintained around 3.9. The capsule formed was well dispersed and generally has a particle size ranging from submicron to one hundred micron depending on the emulsifier and shear rates used.

### Example 5

### Method D: Preparation of Silica Capsule by Adding TEOS Emulsion to Fragrance Emulsion

Step one. Preparation of fragrance emulsion.
Four hundred grams of fragrance (Rapid leach, IPC, 31744979, IFF) emulsion containing 40% fragrance oil was prepared by emulsifying 160 g fragrance oil into 240 of surfactant (CTAC) solution. This fragrance emulsion can be further diluted to the desired fragrance concentration.

Step two: Preparation of TEOS emulsion.
Twenty four grams of TEOS was emulsified into a cooled aqueous surfactant solution (50g) under shearing to give the TEOS emulsion. The surfactant used is a nonionic surfactant Witconol NP-90 (Akzo Noblel Surface Chemistry, Chicago, IL, USA).

Step three. Silica capsule formation by adding TEOS emulsion to fragrance emulsion. The TEOS emulsion prepared in step two was added into the fragrance emulsion prepared in step one under constant mixing. The mixing speed was reduced once the addition of TEOS emulsion was complete. The system was the left at room temperature and cured for an extended period of time. The capsules formed were well dispersed and generally have a particle size ranging from submicron to one hundred micron depending on the emulsifier and shear rates used.

### Example 6

### Method E: Preparation of silica capsule using sol-gel polymer by pre-hydrolysis of TEOS and emulsification of fragrance oil

Step one. Preparation of sol-gel polymer by hydrolysis of TEOS. Fifty grams of TEOS was dissolved in 17.43 g of DI H2O and 44.35 g of Ethanol. The pH of the mixture was then adjusted to a pH of 2 with a 10% solution of HCl. The mixture was allowed to stir for 15 minutes after this time. The mixture was blended with fragrance once the phase separation disappeared.

Step two: Preparation of silica capsule. Two hundred seventy grams of fragrance oil suitable for personal care application was blended with 72 g of the sol-gel precursors and the mixture was directly emulsified into cooled an aqueous surfactant solution under shearing to give the fragrance emulsion. The system was the left at room and cured for an extended period of time. The capsules formed were well dispersed and generally had a particle size ranging from submicron to one hundred micron depending on the emulsifier and shear rates used.

### Example 7. Application Benefits of Silica Capsules

The following example demonstrates the benefits of the use silica capsules in a personal care application. The capsule prepared in Example 1 were suspend in an aqueous medium using a biocide Jeecide CAP-5 (Jeen International Fairfield, NJ), suspending agent Vegum® Pure (R.T. Vanderbilt, Norwalk, CT, USA) and a emulsion stabilizer Inutec SP-1 (commercially available from Orafti, Tienen, Belgium).

The capsule benefits were evaluated by a sensory panel using the following established protocols. A known amount of the capsule suspension (100 ul) was applied to subjects arm via micro pipette. There were 16 subjects per evaluation, each subject had the test capsule applied to one arm and the neat fragrance (non-capsule control) applied to the other arm. A panel of 15 trained intensity judges was employed to evaluate by rating the intensity of fragrance from the skin. Evaluations were conducted immediately after each application and again after 8 hours post application. The subjects gently rub the skin with two fingers to activate the capsule before the 8 hour evaluation. The intensity of each arm is recorded. Repeated measures analysis of variance is used to analyze the data. Significance level is set at p< 0.05. Results are provided below in Table 1.

**Table 1: Capsule fragrance benefits results.**

| Capsule type | Fragrance intensity 8 hours after application | Conclusion |
|---|---|---|
| Neat | 6.5 | |
| Capsule prepared with current invention | 8.0 | There is significant difference between current capsule with p<0.1 (99%) confidence |

The capsules prepared by the process described in Example I generated a significantly greater intensity than the Neat fragrance EDT (cologne base).
This clearly demonstrated the benefits of our invention.

### Example 8. Application benefit of the microcapsule particle composition a person care application.

The following example illustrates the application benefit of the capsules prepared by the process in Example 4 in anti-perspirent (AP) roll-on base. A fragrance capsule slurry was prepared using the process described in Example 4. The capsule slurry was dispersed in a AP-roll base at 0.5% neat fragrance equivalent. The base typically contained 1 to 3% anionic surfactant, 10 to 20 %, aluminium chlorohydrate, less than 1% silica, 1 to 2% Helianthus Annuus and water.

The prepared product containing the capsule (100 ul) in AP roll-on based was applied to the forearm of six panelists and the fragrance intensity was evaluated immediately after application and five hours after application with rubbing by 20 trained intensity judges and data was analyzed statistically. The fragrance intensity is rated from a scale ranging from 0 to 30. A numerical value of 5 would suggest the fabric only produce very week intensity while a value of 30 indicates the subject generate a strong smell.

It was found that, after rubbing the product containing capsule generated significantly greater intensity than a product containing neat fragrance only. The results are given in Table 2. The fragrance capsules prepared in this example were able to retain more that 90% of the fragrance intensity with minimum loss. The fragrance capsules deliver superior consumer befits than neat fragrance.

**Table 2. Fragrance benefits of the capsules prepared by current invention**

| Sample | Fragrance intensity immediately after application , Iₒ | Fragrance intensity five hours after application with rubbing, Iₜ | Ratio of I₀/I₅ₕᵣ |
|---|---|---|---|
| Neat fragrance | 16.5 | 9.8 | 59 |
| Capsules prepared by the current invention | 14.5 | 13.5 | 93 |

Storage test conducted simultaneously indicated that there is only 10% fragrance leach out of the capsule after 5 weeks at 37°C. These results clearly established the excellent consumer benefits and long term stability of the capsules prepared by our invention.

### Example 9

### Method A: Preparation of dry silica capsule by spray drying silica capsule slurry

Twelve hundred grams of silica capsules slurry was prepared by the process in Example 4. The fragrance loading of the capsule slurry is typically around 40%. The capsule was dried using a Niro Mobile Minor 2000. The inlet temperature of the dryer was set at 190 ° C and the atomizer speed was at 20,000 rpm. The capsule slurry was fed into the spray dryer at speed so that the outlet temperature was maintained about 90'C. The powder was then collected for further experimentation.

### Example 10

### Method B: Preparation of dry silica capsule/starch (polymer) encapsulate by spray drying silica capsules and fragrance emulsion

Step 1. Preparation of silica capsules containing fragrance.
Twelve hundred grams of silica capsules slurry was prepared by the process in Example 4. The fragrance loading of the capsule slurry is typically around 40%.

Step 2. Preparation of starch based fragrance emulsion.
A 12% starch solution was prepared by dissolving the needed amount of Capsul Starch (National Starch, Bridgewater, NJ, USA). The fragrance oil was directly emulsified into surfactant solution under shearing to give the desired emulsion. Equal amount of fragrance oil was added to creat the fragrance emulsion. The fragrance loading can be controlled by adjusting the ratio of aqueous to oil phase. The emulsion droplet can be controlled by the shearing rates.

Step 3. Preparation of spray dried silica/starch capsules.
Six hundred gram of the silica capsule prepared in step 1 was combined with 1200 gram of the fragrance emulsion produced in step two under mixing. The mixture was spray dried the same way as the pure silica capsule in Method A in Example 9.

The capsules produced by method have the potential to release its content both by moisture and shearing.

## Claims

1. A process for preparing a microcapsule particles containing an active material in the core comprising the steps of
a. Preparing a mixture of an appropriate amount of sol-gel precursor and an active material;
b. Cooling the mixture obtained in step a;
c. Preparing a surfactant solution by dissolving a surfactant in water;
d. Cooling the surfactant solution obtained in step c;
e. Adding the sol-gel precursor and fragrance oil mixture obtained in step a to the surfactant solution obtained in step c;
f. Homogenizing the mixture of sol-gel precursor, fragrance oil and surfactant solution obtained in step e;
g. Adding a defoamer to the homogenized mixture obtained in step f; and
h. Curing the mixture to form the microcapsule particles.

2. A process for preparing a microcapsule particle composition comprising the steps of
a. Adding a fragrance oil to an aqueous surfactant solution to form a mixture;
b. Homogenizing the mixture obtained in step a to form a fragrance emulsion;
c. Adding a sol-gel precursor dropwise to the fragrance emulsion under continuous mixing;
d. Curing the mixture at room temperature to form the microcapsule particle composition.

3. A process for preparing a microcapsule particle composition comprising the steps of:
a. Adding a fragrance oil to an aqueous surfactant to form a mixture;
b. Homogenizing the mixture obtained in step a to form a fragrance emulsion;
c. Adding an appropriate amount of water to the fragrance emulsion obtained in step b to achieve the desired concentration;
d. Adding a sol-gel precursor to the diluted fragrance emulsion obtained in step c dropwise under constant mixing;
e. Curing the mixture at room temperature until the microcapsule particle composition is formed.

4. A process for preparing a microcapsule particle composition comprising the steps of:
a. Preparing a fragrance emulsion comprising the steps of emulsifying a fragrance oil into surfactant solution;
b. Preparing a sol-gel precursor emulsion by emulsifying a sol-gel precursor and an aqueous surfactant solution;
c. Adding the sol-gel precursor emulsion formed in step b to the fragrance emulsion obtained in step a under constant mixing
d. Curing the mixture obtained in step c at room temperature until the microcapsule particle composition has formed.

5. The process of claim 1, or of claim 2, or of claim 3, or of claim 4, wherein the active material is a fragrance.

6. The process of claim 1, or of claim 2, or of claim 3, or of claim 4, or of claim 5, wherein the sol-gel precursor is selected from a metal or semi-metal alkoxide monomer, or metal ester monomer, semi-metal ester monomer or alkoxysilanes monomer corresponding to the general formula:
(R₁O)(R₂O)M(X)(X') wherein M is equal to Si, Ti, and Zr; wherein X is equal to hydrogen, or -OR₃, and X' is equal to hydrogen, or -OR₄ and R1, R₁, R₂, R₃ and R₄ independently represent a linear or branched alkyl group, preferably a C₁₋₁₂ alkyl.

7. The process of claim 1, or of claim 2, or of claim 3, or of claim 4, or of claim 5, wherein the sol-gel precursor is selected from the group consisting of TMOS, TEOS and mixtures thereof.

8. The process according to claim 1, or of claim 2, or of claim 3, or of claim 4, or any of claims 5 to 7, further comprising the step of removing the water to obtain a final product in a powder form.

9. The microcapsule particle composition obtained by the process of claim 1, or of claim 2, or of claim 3, or of claim 4, or any of claims 5 to 8, in powder form.

10. A personal care composition comprising the microcapsule particle composition prepared according to claim 1, or claim 2, or claim 3, or claim 4, or any of claims 5 to 9.

11. A personal care product comprising the personal care composition of claim 10.

12. The personal care product of claim 11 wherein the personal care product is selected from the group consisting of shampoos, hair rinses, body washes, soaps, anti-perspirant and deodorants.

13. The personal care product of claim 11 wherein the product is an anti-perspirant.

14. The process of claim 4 wherein an appropriate amount of water to the fragrance emulsion obtained in step b to achieve a diluted fragrance emulsion.
